# EUROPÄISCHE PATENTANMELDUNG

(11) **EP 3 967 858 A1**
(43) Veröffentlichungstag der Anmeldung: **16.03.2022**
(21) Anmeldenummer: 20196040.8
(22) Anmeldetag: 14.09.2020
(51) Int. Cl.: F02B 37/00, F02B 37/013, F02B 37/22, F02B 37/18, F04D 29/40, F04D 29/60, F02C 6/12, F01D 25/24, F01D 25/28, F02M 35/10

(54) **MEHRSTUFIGE TURBOLADERANORDNUNG**

(71) Anmelder: ABB Schweiz AG, 5400 Baden (CH)
(72) Erfinder: MATHEY, Christoph, 5442 Fislisbach (CH); HÄGE, Christoph, 79618 Rheinfelden (DE)
(74) Vertreter: Zimmermann & Partner Patentanwälte mbB

(57) **Zusammenfassung**

Eine Mehrstufige Turboladeranordnung (100) wird gemäß dieser Offenbarung bereitgestellt. Die mehrstufige Turboladeranordnung (100) umfasst einer Hochdruckturboladereinheit (110) umfassend eine erste Gehäuseeinheit (134), eine Hochdruckturbine (113) und einen Hochdruckverdichter (114), wobei die Hochdruckturbine (113) und der Hochdruckverdichter (114) über eine Hochdruckturbolader-Welle rotativ aneinander gekoppelt sind. Ferner umfasst die mehrstufige Turboladeranordnung eine Niederdruckturboladereinheit (120) umfassend eine zweite Gehäuseeinheit (136), eine Niederdruckturbine (123) und ein Niederdruckverdichter (124), wobei die Niederdruckturbine (123) und der Niederdruckverdichter (124) über eine Niederdruckturbolader-Welle rotativ aneinander gekoppelt sind. Die Hochdruckturbine (113) ist über eine Abgasleitung (132) fluidisch an die Niederdruckturbine (123) gekoppelt, um Abgas von der Hochdruckturbine (113) zu der Niederdruckturbine (123) zu leiten. Der Niederdruckverdichter (124) ist über eine Leitung fluidisch an den Hochdruckverdichter (114) gekoppelt, um ein Fluid von dem Niederdruckverdichter (124) zu dem Hochdruckverdichter (114) zu leiten. Die Hochdruckturboladereinheit (110) und die Niederdruckturboladereinheit (120) sind lösbar miteinander verbunden. Die Niederdruckturboladereinheit (120) trägt die Hochdruckturboladereinheit (110).

## Beschreibung

### TECHNISCHES GEBIET

Ausführungsformen der vorliegenden Offenbarung beziehen sich auf mehrstufige Turboladeranordnungen. Insbesondere beziehen sich Ausführungsformen der vorliegenden Offenbarung auf mehrstufige Turboladeranordnungen mit einer oder mehreren Hochdruck- und einer Niederdruckeinheiten.

### STAND DER TECHNIK

Mehrstufige Turbolader haben separate Turboladereinheiten, die miteinander und mit einem Ladeluftweg des Motors (z.B. durch einen Zwischenkühler) verbunden sind. Die Turbinengehäuse sind durch Abgasleitungen miteinander verbunden, die den Durchfluss heißer Gase ermöglichen: Die Motorabgase werden zunächst zu einem Hochdruckturbineneinlass geleitet, dann über die Hochdruckturbine und durch den Hochdruckturbinenauslass zum Niederdruckturbineneinlass und schließlich über die Niederdruckturbine und durch den Auslassweg mit Hilfe von Abgaskrümmern in die Umgebung geleitet. Diese Art von Architektur erfordert eine große Grundfläche der Baugruppen (d.h. den für die Montage einer zusammengebauten Einheit erforderlichen Platz) an einer Motorinstallation sowie mehrere Rohrleitungsverbindungen, Faltenbälge, Halterungen, Kupplungen, Isolierungen und Halterungen zur Strukturverbesserung, die die Rohrleitungsschwingungen reduzieren und Ausfallmodi verhindern sollen. Darüber hinaus ist eine solche Anordnung in Bezug auf Komponentenbaugruppen, Stücklisten und Service von beträchtlicher Komplexität. Bei Motorbaugruppen an Bord, bei denen die Abstände von größter Bedeutung sind, stellt der Platzbedarf von mehrstufigen Turboladern ein besonders großes Problem dar.

Vor diesem Hintergrund besteht dementsprechend ein Bedarf an verbesserten mehrstufigen Turboladeranordnungen, die die Probleme des Standes der Technik zumindest teilweise überwinden.

### ZUSAMMENFASSUNG DER ERFINDUNG

Vor diesem Hintergrund ist eine mehrstufige Turboladeranordnung gemäß unabhängigem Anspruch 1 vorgesehen. Weitere Aspekte, Vorteile und Merkmale ergeben sich aus den abhängigen Ansprüchen, der Beschreibung und den begleitenden Zeichnungen.

Gemäß einem Aspekt der vorliegenden Offenbarung wird eine mehrstufige Turboladeranordnung bereitgestellt. Die mehrstufige Turboladeranordnung umfasst einer Hochdruckturboladereinheit umfassend eine erste Gehäuseeinheit, eine Hochdruckturbine und einen Hochdruckverdichter, wobei die Hochdruckturbine und der Hochdruckverdichter über eine Hochdruckturbolader-Welle rotativ aneinander gekoppelt sind. Des Weiteren umfasst die mehrstufige Turboladeranordnung einer Niederdruckturboladereinheit umfassend eine zweite Gehäuseeinheit, eine Niederdruckturbine und ein Niederdruckverdichter, wobei die Niederdruckturbine und der Niederdruckverdichter über eine Niederdruckturbolader-Welle rotativ aneinander gekoppelt sind. Die Hochdruckturbine ist über eine Abgasleitung fluidisch an die Niederdruckturbine gekoppelt, um Abgas von der Hochdruckturbine zu der Niederdruckturbine zu leiten. Der Niederdruckverdichter ist über eine Leitung fluidisch an den Hochdruckverdichter gekoppelt, um ein Fluid von dem Niederdruckverdichter zu dem Hochdruckverdichter zu leiten, und die Hochdruckturboladereinheit und die Niederdruckturboladereinheit sind lösbar miteinander verbunden. Die Niederdruckturboladereinheit trägt die Hochdruckturboladereinheit z.B. im montierten Zustand.

Dementsprechend wird eine verbesserte mehrstufige Turboladeranordnung bereitgestellt. Ausführungsformen der vorliegenden Offenbarung haben insbesondere den Vorteil, dass durch die Anordnung der Turboladereinheiten übereinander (indem die Niederdruckturboladereinheit die Hochdruckturboladereinheit trägt) bzw. durch die Anordnung der Gehäuseeinheiten übereinander der Platzbedarf und insbesondere der Grundflächenbedarf (footprint) des Motors verringert wird. Ein weiterer Vorteil ist, dass die Montagekosten durch die Reduzierung der Anzahl der Teile, d.h. durch die platzsparende Konfiguration, gesenkt werden können. Darüber hinaus ist die mehrstufige Turboladeranordnung vorteilhaft so konfiguriert, dass die Abgasleitungen, die eine oder mehrere Hochdruckeinheiten mit der Niederdruckeinheit und insbesondere die Hochdruckturbinen mit der Niederdruckturbine verbinden, größtenteils entfallen bzw. auf eine geringe Länge reduziert werden können. Dementsprechend können Gasströmungsleistung und -effizienz verbessert werden. Ein weiterer Vorteil ist die Möglichkeit der Modularisierung, so dass Anforderungen einer Motorplattform mit mehreren Konfigurationen erfüllt werden können.

Ausführungsformen richten sich auch auf Verfahren zum Betrieb der beschriebenen mehrstufigen Turboladeranordnung. Sie umfasst Verfahrensaspekte zur Ausführung jeder Funktion der Turboladeranordnung.

### KURZE BESCHREIBUNG DER ZEICHNUNGEN

Damit die Art und Weise, in der die oben angeführten Merkmale der vorliegenden Offenbarung im Detail verstanden werden können, kann eine konkretere Beschreibung der Offenbarung, die oben kurz zusammengefasst wurde, durch Bezugnahme auf Ausführungsformen erfolgen. Die begleitenden Zeichnungen beziehen sich auf Ausführungsformen der Offenbarung und werden im Folgenden beschrieben:
- Fig. 1: zeigt schematisch eine mehrstufige Turboladeranordnung gemäß beschriebener Ausführungsformen;
- Fig. 2: zeigt schematisch eine Draufsicht einer mehrstufigen Turboladeranordnung gemäß beschriebener Ausführungsformen;
- Fig. 3A: zeigt eine schematische Seitenansicht einer mehrstufigen Turboladeranordnung gemäß beschriebener Ausführungsformen;
- Fig. 3B: zeigt eine schematische Frontansicht einer mehrstufigen Turboladeranordnung gemäß beschriebener Ausführungsformen;
- Fig. 4A: zeigt eine schematische Seitenansicht einer mehrstufigen Turboladeranordnung gemäß beschriebener Ausführungsformen; und
- Fig. 4B: zeigt eine schematische Frontansicht einer mehrstufigen Turboladeranordnung gemäß beschriebener Ausführungsformen.

### WEGE ZUR AUSFÜHRUNG DER ERFINDUNG

Es wird nun im Einzelnen auf die verschiedenen Ausführungsformen der Offenlegung eingegangen, von denen ein oder mehrere Beispiele in den Abbildungen illustriert sind. In der folgenden Beschreibung der Zeichnungen beziehen sich die gleichen Referenznummern auf die gleichen Komponenten. Generell werden nur die Unterschiede in Bezug auf einzelne Ausführungsformen beschrieben. Jedes Beispiel dient der Erläuterung der Offenbarung und ist nicht als eine Einschränkung der Offenbarung gedacht. Ferner können Merkmale, die als Teil einer Ausführungsform dargestellt oder beschrieben sind, auf oder in Verbindung mit anderen Ausführungsformen angewendet werden, um eine weitere Ausführungsform zu erhalten. Es ist beabsichtigt, dass die Beschreibung solche Modifikationen und Variationen enthält.

Die vorliegende Erfindung findet Anwendung bei Turboladern, insbesondere bei mehrstufigen Turboladern mit mindestens einer Hochdruckturboladereinheit und einer Niederdruckturboladereinheit. Die Anordnung der Hochdruckturboladereinheit und der Niederdruckturboladereinheit ermöglicht einen verbesserten Wirkungsgrad des Turboladers sowie ein kompaktes Design und eine erleichterte Montage. Ferner wird in Ausführungsformen der Logistikaufwand drastisch reduziert und die Befestigung der Turboladereinheiten insgesamt stabilisiert. Insgesamt müssen weniger Teile verbaut werden, was gleichzeitig einen geringeren Isolationsaufwand mit sich bringt.

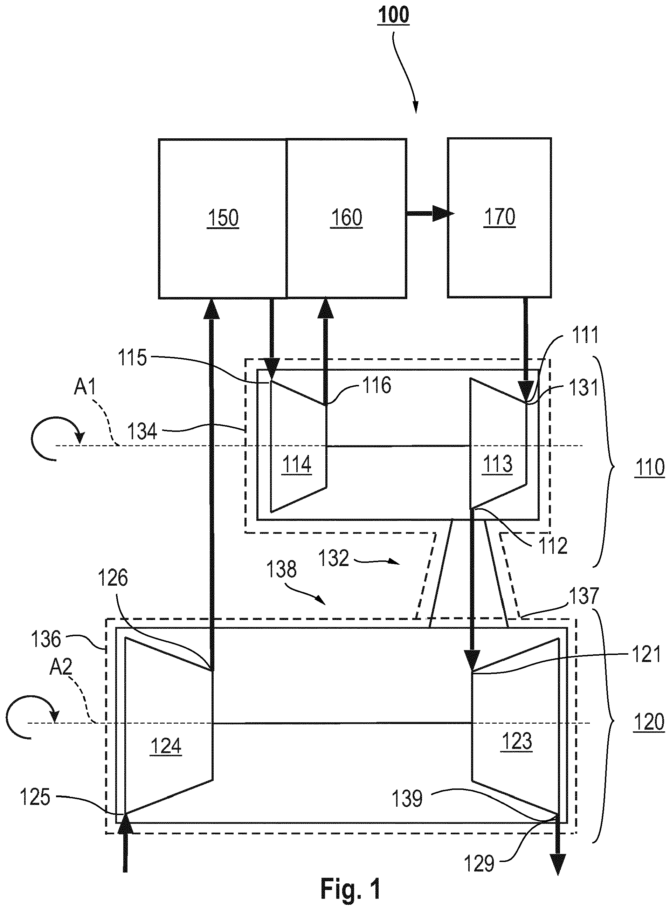

Wie beispielhaft in Fig. 1 gezeigt und gemäß Ausführungsformen, die mit anderen beschriebenen Ausführungsformen kombiniert werden können, wird eine mehrstufige Turboladeranordnung bereitgestellt. Die mehrstufige Turboladeranordnung 100 umfasst eine (d.h. mindestens eine) Hochdruckturboladereinheit 110, die eine erste Gehäuseeinheit 134, eine Hochdruckturbine 113 und einen Hochdruckverdichter 114 umfasst. Die Hochdruckturbine 113 und der Hochdruckverdichter 114 sind über eine Hochdruckturbolader-Welle rotativ aneinandergekoppelt. In dieser Beschreibung sind die Termini "Hochdruckturboladereinheit" und "Hochdruckeinheit" synonym zu verstehen. Ferner umfasst die mehrstufige Turboladeranordnung eine (d.h. mindestens eine) Niederdruckturboladereinheit 120, die eine zweite Gehäuseeinheit 136, eine Niederdruckturbine 123 und ein Niederdruckverdichter 124 umfasst. Die Niederdruckturbine 123 und der Niederdruckverdichter 124 sind über eine Niederdruckturbolader-Welle rotativ aneinandergekoppelt. In dieser Beschreibung sind die Termini "Niederdruckturboladereinheit" und "Niederdruckeinheit" synonym zu verstehen.

Die Hochdruckturbine 113 ist über eine Abgasleitung 132 fluidisch an die Niederdruckturbine 123 gekoppelt, um Abgas von der Hochdruckturbine 113 zu der Niederdruckturbine 123 zu leiten. Der Niederdruckverdichter 124 ist über eine Leitung, z.B. eine Verdichtungsleitung, fluidisch an den Hochdruckverdichter 114 gekoppelt, um ein Fluid, z.B. ein Verdichtungsfluid, von dem Niederdruckverdichter 124 zu dem Hochdruckverdichter 114 zu leiten. Das Fluid kann ein Gas, insbesondere Luft, z.B. Ladeluft oder ein Luftgemisch oder eine Flüssigkeit sein. Zum Beispiel kann die Leitung, insbesondere die Verdichtungsleitung, eine Ladeluftleitung sein d.h. eine Leitung zur Übertragung von Ladeluft als Fluid oder Verdichtungsfluid. Ferner sind die Hochdruckturboladereinheit 110 und die Niederdruckturboladereinheit 120 lösbar miteinander verbunden. Dabei trägt die Niederdruckturboladereinheit 120 die Hochdruckturboladereinheit 110.

Gemäß Ausführungsformen, die mit anderen beschriebenen Ausführungsformen kombiniert werden können, kann die Verdichtungsleitung einen Zwischenkühler durchlaufen. Mit anderen Worten kann der Niederdruckverdichter 124 fluidisch mit einem Zwischenkühler 150 zur Kühlung von Ladeluft gekoppelt sein, sodass der Wirkungsgrad der Aufladung erhöht werden kann.

Ein weiterer Vorteil der Ausführungsformen wie hier beschrieben liegt im kompakteren Design der Turboladeranordnung, was zu einer erleichterten Montage und einem geringeren Isolationsaufwand führt. Dabei kann die Befestigung stabiler ausgestaltet sein, obwohl weniger Teile wie z.B. Stützen verbaut werden müssen. Dies bringt ferner vorteilhaft einen reduzierten Logistikaufwand mit sich.

Es ist zu berücksichtigen, dass die mehrstufige Turboladeranordnung 100 eine oder mehrere Hochdruckeinheiten 110 wie hierin beschrieben, umfassen kann. Somit können die eine oder mehreren Hochdruckeinheiten jeweils lösbar mit der Niederdruckeinheit 120 verbunden sein und die Niederdruckeinheit 120 kann so ausgestaltet sein, dass die Niederdruckeinheit die eine oder mehreren Hochdruckeinheiten 110 trägt.

Dass die Niederdruckeinheit die Hochdruckeinheit oder Hochdruckeinheiten trägt, kann dabei in dieser Offenbarung so verstanden werden, dass das Gewicht der jeweiligen Hochdruckturboladereinheit im montierten Zustand überwiegend (z.B. 50% oder mehr, oder sogar 80% oder mehr des Gewichtes) durch die Niederdruckturboladereinheit abgestützt werden. Bevorzugt kann die Hochdruckturboladereinheit oder mehrere Hochdruckturboladereinheiten ohne zusätzliche Stützen auf der Niederdruckturboladereinheit montiert werden und ohne weitere Abstützung dort im montierten Zustand verbleiben.

Wie beispielhaft in Fig. 1 dargestellt und gemäß Ausführungsformen, die mit anderen beschriebenen Ausführungsformen kombiniert werden können, umfasst die Hochdruckturboladereinheit eine erste Gehäuseeinheit 134, auch als erstes Gehäuse bezeichnet. Die erste Gehäuseeinheit kann jede Komponente der Hochdruckeinheit umrahmen bzw. beinhalten, z.B. können innerhalb der Gehäuseeinheit die Hochdruckturbine 113, der Hochdruckverdichter 114 und die Hochdruckturbolader-Welle angeordnet sein. Die Hochdruckturbolader-Welle kann um eine erste Rotationsachse A1 rotierbar sein und die Niederdruckturbolader-Welle um eine zweite Rotationsachse A2 rotierbar sein. Innerhalb der ersten Gehäuseeinheit oder des ersten Gehäuses können ferner Vorrichtungen zur Kühlung der Hochdruckturboladereinheit angeordnet sein, z.B. Kühlungswände, Kühlschleifen und dergleichen. Die erste Gehäuseeinheit 134 kann ferner einen Abgaseinlass 131 zum Einströmen von Abgasen aus einem Motor 170 in Richtung der Hochdruckturbine umfassen. Insbesondere kann der Abgaseinlass 131 ein Hochdruckturbineneinlass 111 sein.

Gemäß Ausführungsformen, die mit anderen beschriebenen Ausführungsformen kombiniert werden können, umfasst die Niederdruckturboladereinheit eine zweite Gehäuseeinheit 136, auch als zweites Gehäuse bezeichnet. Die zweite Gehäuseeinheit 136 kann einen Abgasauslass 139 umfassen, der das Abgas aus der Niederdruckturbine 123 nach außerhalb der zweiten Gehäuseeinheit 136 führt, wie in Fig. 1 beispielhaft dargestellt. Insbesondere kann der Abgasauslass 139 ein Niederdruckturbinenauslass 129 sein.

Gemäß Ausführungsformen, die mit anderen beschriebenen Ausführungsformen kombiniert werden können, können die erste und zweite Gehäuseeinheit jeweils aus einem gegossenen Material hergestellt sein. Insbesondere kann das gegossene Material zum Beispiel eine Aluminiumlegierung sein. Weiterhin ist zu verstehen, dass die Gehäuseeinheiten aus anderen Materialien wie Stahlguss, Grauguss oder anderen geeigneten Gusswerkstoffen hergestellt werden kann. Gemäß einem Beispiel sind die hier beschriebenen Gehäuseeinheiten aus zwei verschiedenen Materialien hybridartig hergestellt, insbesondere nach dem ALFIN-Verfahren, zur jeweils einzelnen Unterbringung der Hochdruck- als auch der Niederdruckeinheit. Die Gehäuse bzw. Gehäuseeinheiten können jeweils ein- oder mehrteilig sein.

Wie beispielhaft in Fig. 1 dargestellt und gemäß Ausführungsformen, die mit anderen beschriebenen Ausführungsformen kombiniert werden können, ist die Hochdruckturbine 113 über eine Abgasleitung 132 fluidisch an die Niederdruckturbine 123 gekoppelt, um Abgas von der Hochdruckturbine 113 zu der Niederdruckturbine 123 zu leiten. Insbesondere kann die erste Gehäuseeinheit 134 die Abgasleitung 132 zwischen einem Hochdruckturbinenauslass 112 der Hochdruckturbine 113 und einem Niederdruckturbineneinlass 121 der Niederdruckturbine 123 umfassen. Ferner insbesondere ist die Abgasleitung 132 ein strömungsoptimierter Durchgang, d.h. optimiert in Bezug auf die Strömung vom Hochdruckturbinenauslass 112 der Hochdruckturbine 113 zum Niederdruckturbineneinlass 121 der Niederdruckturbine 123. Vorteilhafterweise können weitere Abgasleitungen, die die verschiedenen Stufen verbinden, eliminiert werden, so dass die Gasströmungsleistung und der Wirkungsgrad verbessert werden können.

Gemäß Ausführungsformen, die mit anderen beschriebenen Ausführungsformen kombiniert werden können, kann die Abgasleitung 132 einen in der Hochdruckturboladereinheit 110 verlaufenden, sich in eine Strömungsrichtung aufweitenden Diffusorabschnitt umfassen. Ferner oder alternativ kann die Abgasleitung 132 einen in der Hochdruckturboladereinheit 110 verlaufenden, sich in eine Strömungsrichtung konisch verengenden Leitungsabschnitt umfassen. Vorteilhafterweise kann hierdurch die fluidische Kopplung zwischen der Hochdruckeinheit und der Niederdruckeinheit besonders direkt d.h. auf kürzestem Wege ausgestaltet sein. Die Hochdruckeinheit kann so auf kürzestem Wege mit der Niederdruckeinheit verbunden sein. Somit muss weniger Material aufgewendet werden und ein besonders kompaktes Design der Turboladeranordnung wird ermöglicht.

Gemäß Ausführungsformen, die mit anderen beschriebenen Ausführungsformen kombiniert werden können, kann die Abgasleitung 132 vollständig innerhalb der ersten und/oder zweiten Gehäuseeinheit verlaufen. Insbesondere kann der Diffusorabschnitt oder der konisch verengende Leitungsabschnitt vollständig innerhalb der ersten Gehäuseeinheit 134 und/oder der zweiten Gehäuseeinheit 136 verlaufen. Vorzugsweise kann der Diffusorabschnitt oder der konisch verengende Leitungsabschnitt vollständig innerhalb der ersten Gehäuseeinheit 134 verlaufen. Als konisch verengender Leitungsabschnitt wird hierbei ein sich in Strömungsrichtung verengender Abschnitt der Leitung oder auch ein Konusabschnitt verstanden, auch wenn er keine im streng geometrischen Sinne konische Form aufweist.

Vorteilhafterweise können so die verschiedenen Stufen ohne weiteren Materialaufwand und auf kürzestem Wege miteinander verbunden sein. Dies ermöglicht unter anderem z.B. eine "Huckepack"-Anordnung der Hochdruckeinheit und der Niederdruckeinheit, d.h. die Hochdruckturboladereinheit kann so auf der Niederdruckturboladereinheit montiert werden, dass die Niederdruckeinheit die Hochdruckeinheit trägt.

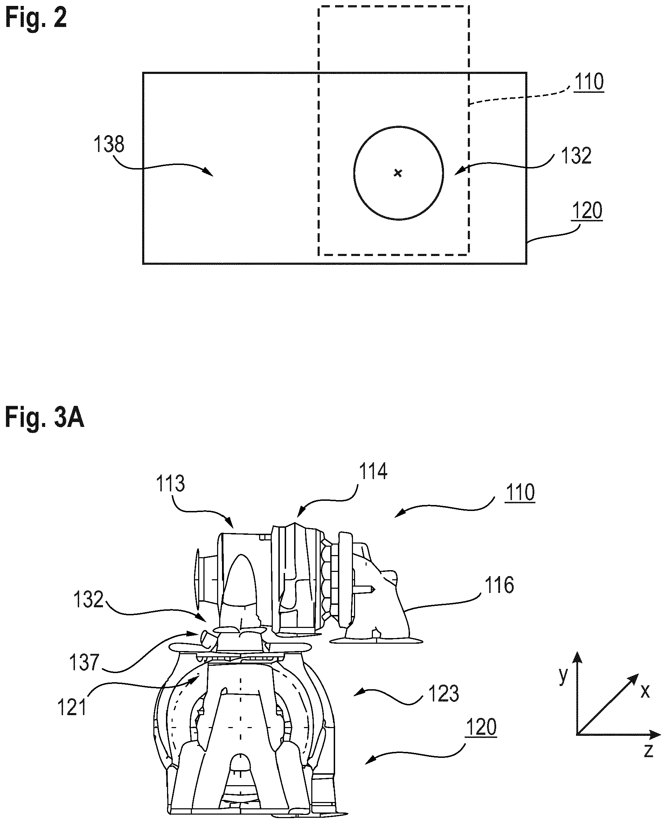

Gemäß Ausführungsformen, die mit anderen beschriebenen Ausführungsformen kombiniert werden können, kann die erste Gehäuseeinheit 134 der Hochdruckturboladereinheit mit der zweiten Gehäuseeinheit 136 der Niederdruckturboladereinheit gekoppelt oder verbunden sein. Dabei kann die zweite Gehäuseeinheit 136 der Niederdruckeinheit eine Grenzfläche 138 bereitstellen wie beispielsweise in Figuren 1 und 2 gezeigt. Die Grenzfläche 138 kann parallel zur Ebene verlaufen, in der die Niederdruckeinheit angeordnet ist, d.h. die Grenzfläche kann parallel zu einer horizontalen Montageebene der Niederdruckeinheit sein. Die Grenzfläche 138 kann eine Abgrenzung der zweiten Gehäuseeinheit in Richtung der Hochdruckeinheit sein. In anderen Worten kann die Grenzfläche eine obere Abgrenzung der zweiten Gehäuseeinheit der Niederdruckeinheit sein.

Gemäß Ausführungsformen, die mit anderen beschriebenen Ausführungsformen kombiniert werden können, kann der Diffusorabschnitt oder der verengende Leitungsabschnitt die Grenzfläche 138 zwischen der ersten und der zweiten Gehäuseeinheit 134, 136 durchlaufen oder an die Grenzfläche angrenzen. Beispielsweise kann die Grenzfläche 138 eine Öffnung umfassen, durch die der Diffusorabschnitt oder der verengende Leitungsabschnitt durchgeführt sein kann. Alternativ können der Diffusorabschnitt oder der verengende Leitungsabschnitt an die Grenzfläche angrenzen, d.h. ein aufgeweitetes Ende des Diffusorabschnitts oder ein verengtes Ende des Leitungsabschnitts kann direkt an die Grenzfläche d.h. die Öffnung in der Grenzfläche angrenzen.

Gemäß Ausführungsformen, die mit anderen beschriebenen Ausführungsformen kombiniert werden können, kann die Grenzfläche 138 einen Gaseinlass 137 umfassen. Der Gaseinlass kann in derselben Ebene liegen wie die Grenzfläche. Der Gaseinlass kann die Öffnung sein, durch die der Diffusorabschnitt oder der verengende Leitungsabschnitt durchgeführt sein kann bzw. an die der Diffusorabschnitt oder der verengende Leitungsabschnitt angrenzen kann. Am Gaseinlass 137 kann die Hochdruckeinheit mit der Niederdruckeinheit gekoppelt sein. Der Gaseinlass 137 kann in einen Niederdruckturbineneinlass 121 übergehen, d.h. der Gaseinlass kann mit dem Niederdruckturbineneinlass fluidisch gekoppelt oder verbunden sein.

Gemäß Ausführungsformen, die mit anderen beschriebenen Ausführungsformen kombiniert werden können, kann die erste Gehäuseeinheit 134 mit der zweiten Gehäuseeinheit 136 am Gaseinlass 137, insbesondere über einen Flansch, verbunden sein. Gemäß Ausführungsformen, können die erste Gehäuseeinheit 134 und die zweite Gehäuseeinheit 136 jeweils einen die Abgasleitung umlaufenden Flanschteil aufweisen. Die erste Gehäuseeinheit 134 und die zweite Gehäuseeinheit 136 können an den Flanschteilen miteinander lösbar verbunden sein. Die Flansche bzw. Flanschteile können mit Fixiermitteln wie z.B. Bolzen und/oder Schrauben lösbar verbunden sein. Eine lösbare Verbindung liegt insbesondere dann vor, wenn die Gehäuseeinheiten 134 und 136 (bzw. die Niederdruck- und die Hochdruckturboladereinheit), gegebenenfalls unter Einsatz von üblichen Werkzeugen wie etwa Schraubwerkzeugen, zerstörungsfrei voneinander getrennt können derart, dass die Verbindung anschließend wiederhergestellt werden kann.

Beispielsweise kann die zweite Gehäuseeinheit 136 einen Flansch am Gaseinlass, d.h. einen den Gaseinlass umlaufenden Flansch, aufweisen und die erste Gehäuseeinheit 134 einen Flansch an der Abgasleitung 132, d.h. einen die Abgasleitung umlaufenden Flansch, aufweisen.

Zusätzlich oder alternativ, zum Beispiel wenn die Abgasleitung vollständig in der zweiten Gehäuseeinheit 136 verläuft, kann die zweite Gehäuseeinheit 136 einen Flansch an einem Eingang der Abgasleitung, aufweisen. Die erste Gehäuseeinheit 134 kann einen Flansch am Hochdruckturbinenauslass 112, bzw. auf Höhe oder in der Nähe des Hochdruckturbinenauslasses 112 aufweisen.

Gemäß Ausführungsformen, die mit anderen beschriebenen Ausführungsformen kombiniert werden können, kann die Hochdruckeinheit 110 so ausgelegt sein, dass sie im Betrieb der mehrstufigen Turboladeranordnung eine umgekehrte Drehrichtung im Vergleich zu einer Drehrichtung der Niederdruckeinheit 120 aufweist. Alternativ kann die Hochdruckeinheit 110 so konfiguriert sein, dass sie dieselbe Drehrichtung wie die Niederdruckeinheit 120 während des Betriebs der mehrstufigen Turboladeranordnung hat.

Gemäß Ausführungsformen, die mit anderen beschriebenen Ausführungsformen kombiniert werden können, kann die zweite Gehäuseeinheit 136 einen ersten Flansch zum Anschluss eines Schalldämpfers 127, eines Einlassgehäuses oder einer Einlassleitung an einen Niederdruckverdichtereinlass 125 umfassen.

Gemäß Ausführungsformen, die mit anderen beschriebenen Ausführungsformen kombiniert werden können, kann die erste Gehäuseeinheit 134 einen zweiten Flansch zum Anschluss eines Einlassgehäuses oder einer Einlassleitung, insbesondere eines Winkel-Einlassgehäuses oder Winkel-Einlassrohrs, an einen Hochdruckverdichtereinlass 115 umfassen.

Gemäß Ausführungsformen, die mit anderen beschriebenen Ausführungsformen kombiniert werden können, kann die zweite Gehäuseeinheit 136 einen dritten Flansch zum Anschluss eines Auslassgehäuses oder einer Auslassleitung, insbesondere eines Krümmer-Auslassgehäuses oder eines Krümmer-Auslassrohrs, an einem Niederdruckturbinenauslass 122 umfassen.

Gemäß Ausführungsformen, die mit anderen beschriebenen Ausführungsformen kombiniert werden können, kann die erste Gehäuseeinheit 134 einen vierten Flansch zur Verbindung eines Einlassgehäuses oder Einlassrohrs mit dem Einlass der Hochdruckturbine 111 umfassen.

Gemäß Ausführungsformen, die mit anderen beschriebenen Ausführungsformen kombiniert werden können, kann das enthält die zweite Gehäuseeinheit 136 einen Niederdruckverdichterauslass 126 umfassen. Insbesondere kann der Niederdruckverdichterauslass 126 für die Versorgung eines Zwischenkühlers 150 mit Niederdruckluft konfiguriert sein.

Gemäß Ausführungsformen, die mit anderen beschriebenen Ausführungsformen kombiniert werden können, kann die erste Gehäuseeinheit 134 einen Hochdruckverdichterauslass 116 umfassen. Insbesondere kann der Hochdruckverdichterauslass 116 für die Versorgung eines Ladeluftkühlers 160 mit Hochdruckluft konfiguriert sein.

Gemäß Ausführungsformen, die mit anderen beschriebenen Ausführungsformen kombiniert werden können, kann die erste Gehäuseeinheit 134 ein Abblaseelement zur Bereitstellung einer Vorrichtung zur Begrenzung eines Ladedrucks aufweisen. Insbesondere kann die erste Gehäuseeinheit der mehrstufigen Turboladeranordnung mindestens ein Abgasabblaseelement aufweisen.

Gemäß Ausführungsformen, die mit anderen beschriebenen Ausführungsformen kombiniert werden können, kann die erste Gehäuseeinheit 134 der mehrstufigen Turboladeranordnung ein Abgasabblaseelement oder eine Abgasschleuse zur Bereitstellung einer Einrichtung zur Begrenzung des Ladeluftdrucks enthalten. Insbesondere kann die erste Gehäuseeinheit 134 mindestens eine aus der Gruppe bestehend aus einem Niederdruck-Abgasabblaseelement, einem Hochdruck-Abgasabblaseelement, einem mehrstufigen Abgasabblaseelement und einem variablen Abgasabblaseelement enthalten.

Beispielsweise kann das Niederdruck-Abgasabblaseelement einen Strömungskanal für das Abgas vom Hochdruckturbinenauslass vor dem Niederdruckturbineneinlass 121 zum Niederdruckturbinenauslass 129 oder zum Abgasauslass 139 bereitstellen. Insbesondere kann die Niederdruck-Abgasschleuse mit der Abgasleitung 132 zwischen der Hochdruckturbine 113 und der Niederdruckturbine 123 verbunden werden. Ferner kann das Hochdruck-Abgasabblaseelement einen Strömungskanal für das Abgas vom Motor 170 vor dem Hochdruckturbineneinlass 111 zum Hochdruckturbinenauslass 112 oder zum Niederdruckturbineneinlass 121 bereitstellen. Insbesondere kann das Hochdruck-Abgasabblaseelement mit der Abgasleitung 132 zwischen der Hochdruckturbine 113 und der Niederdruckturbine 123 verbunden werden.

Gemäß Ausführungsformen, die mit anderen beschriebenen Ausführungsformen kombiniert werden können, kann das mehrstufigen Abgasabblaseelement einen Strömungskanal für das Abgas vom Motor 170 vor dem Hochdruckturbineneinlass 111 zum Niederdruckturbinenauslass 129 oder zum Abgasauslass 139 bereitstellen.

Gemäß Ausführungsformen, die mit anderen beschriebenen Ausführungsformen kombiniert werden können, kann das variable Abgasabblaseelement einen Strömungskanal für das Abgas vom Motor 170 vor dem Hochdruckturbineneinlass 111 zum Hochdruckturbinenauslass 112 (oder zum Niederdruckturbineneinlass 121) und/oder zum Niederdruckturbinenauslass 129 (oder zum Abgasauslass 139) oder vom Hochdruckturbinenauslass 112 (oder vom Niederdruckturbineneinlass 121) zum Niederdruckturbinenauslass 129 (oder zum Abgasauslass 139) bereitstellen. Insbesondere kann das variable Abgasabblaseelement an die Abgasleitung 132 zwischen der Hochdruckturbine 113 und der Niederdruckturbine 123 angeschlossen werden. Darüber hinaus kann das variable Abgasabblaseelement so konfiguriert sein, dass der Strömungskanal für das Abgas vom Motor 170 vor dem Hochdruckturbineneinlass 111 zum Hochdruckturbinenauslass 112 (oder zum Niederdruckturbineneinlass 121) und/oder zum Niederdruckturbinenauslass 129 (oder zum Abgasauslass 139) oder vom Hochdruckturbinenauslass 112 (oder vom Niederdruckturbineneinlass 121) zum Niederdruckturbinenauslass 129 (oder zum Abgasauslass 139) wählbar ist.

Gemäß Ausführungsformen, die mit anderen beschriebenen Ausführungsformen kombiniert werden können, können die erste Gehäuseeinheit 134 und die zweite Gehäuseeinheit 136 mindestens ein Abblaseelement ausgewählt aus der Gruppe bestehend aus einem Niederdruckverdichter-Luftauslass, einem Hochdruckverdichter-Lufteinlass, einem mehrstufigen Abblaseelement und einem variablen Abblaseelement aufweisen. Insbesondere kann die zweite Gehäuseeinheit 136 einen Niederdruckverdichter-Luftauslass aufweisen. Der Niederdruckverdichter-Luftauslass kann insbesondere zur Versorgung des Zwischenkühlers mit Niederdruckluft dienen. Ferner insbesondere kann die erste Gehäuseeinheit 134 einen Hochdruckverdichter-Lufteinlass aufweisen, der insbesondere zum Einlass der gekühlten Ladeluft dienen kann.

Gemäß Ausführungsformen, die mit anderen beschriebenen Ausführungsformen kombiniert werden können, kann das Niederdruckverdichter-Luftauslass einen Strömungskanal für die Luft vom Niederdruckverdichterauslass 126 bereitstellen. Ferner kann der Hochdruckverdichter-Lufteinlass einen Strömungskanal für die Luft vom Hochdruckverdichterauslass 116 zum Hochdruckverdichtereinlass 115 bereitstellen. Zusätzlich oder alternativ kann das mehrstufige Abblaseelement einen Strömungskanal für die Luft vom Hochdruckverdichterauslass 116 zum Niederdruckverdichtereinlass 125 bereitstellen. Zusätzlich oder alternativ kann das variable Abblaseelement einen Strömungskanal für die Luft vom Hochdruckverdichterauslass 116 zum Niederdruckverdichtereinlass 125 und/oder zum Niederdruckverdichterauslass 126 oder vom Niederdruckverdichterauslass 126 zum Niederdruckverdichtereinlass 125 bereitstellen.

Insbesondere kann das variable Abblaseelement so konfiguriert sein, dass der Strömungskanal für die Luft vom Hochdruckverdichterauslass 116 zum Niederdruckverdichtereinlass 125 und/oder Niederdruckverdichterauslass 126 oder vom Niederdruckverdichterauslass 126 zum Niederdruckverdichtereinlass 125 wählbar ist.

Gemäß Ausführungsformen, die mit anderen beschriebenen Ausführungsformen kombiniert werden können, kann sich der Diffusorabschnitt oder der verengende Leitungsabschnitt über mehr als 50% einer Länge der Abgasleitung 132 erstrecken. Insbesondere kann sich der Diffusorabschnitt oder der verengende Leitungsabschnitt über mehr als 80% der Länge der Abgasleitung, weiter insbesondere über mehr als 90% der Länge der Abgasleitung erstrecken. So kann eine möglichst geringe Länge eines nicht aufweitenden oder nicht verengenden Abgasleitungsabschnitts erzielt werden. Die Länge der Abgasleitung kann als Länge von der Hochdruckturbine zu der Niederdruckturbine, entlang der Mitte der Abgasleitung betrachtet werden.

Wie beispielhaft in Fig. 2 gezeigt und gemäß Ausführungsformen, die mit anderen beschriebenen Ausführungsformen kombiniert werden können, kann die Hochdruckturboladereinheit 110 auf der Niederdruckturboladereinheit 120 angeordnet sein. Die Niederdruckeinheit trägt die Hochdruckeinheit. Die Hochdruckeinheit kann über die Abgasleitung 132 mit der Niederdruckeinheit verbunden sein. Beispielsweise kann die Hochdruckeinheit so auf der Niederdruckeinheit angeordnet sein, dass mindestens 50% oder mehr des Gewichts der Hochdruckturboladereinheit auf die Niederdruckeinheit wirken.

Gemäß Ausführungsformen, die mit anderen beschriebenen Ausführungsformen kombiniert werden können, kann die Hochdruckeinheit versetzt im Vergleich zur Niederdruckeinheit angeordnet sein. Zum Beispiel kann eine Montageebene der Hochdruckeinheit parallel zu einer Montageebene der Niederdruckeinheit bzw. zur Grenzfläche 138 der Niederdruckeinheit angeordnet sein. Zusätzlich kann eine Montageebene der Hochdruckeinheit zu einer Montageebene der Niederdruckeinheit bzw. zur Grenzfläche 138 der Niederdruckeinheit versetzt, insbesondere parallel versetzt, angeordnet sein. Insbesondere kann eine Montageebene der Hochdruckeinheit um 90° versetzt bzw. gedreht zu einer Montageebene der Niederdruckeinheit bzw. zur Grenzfläche 138 der Niederdruckeinheit angeordnet sein.

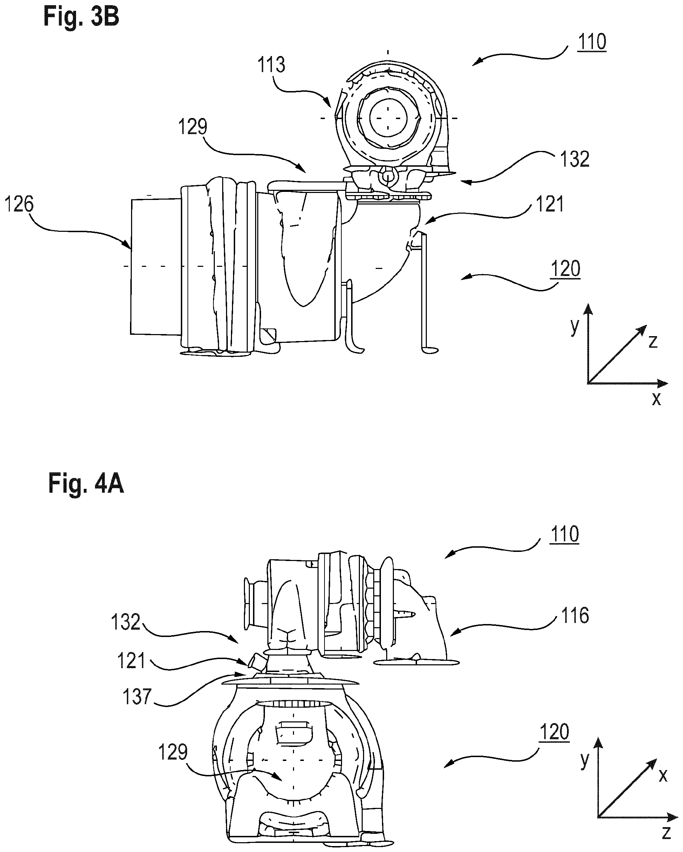

Wie beispielhaft in den Figuren 3A und 3B gezeigt und gemäß Ausführungsformen, die mit anderen beschriebenen Ausführungsformen kombiniert werden können, kann die Hochdruckeinheit auf der Niederdruckeinheit montiert sein. Insbesondere können die erste Gehäuseeinheit und die zweite Gehäuseeinheit lösbar miteinander verbunden bzw. montiert sein, wie gemäß Ausführungsformen beschrieben. Beispielsweise kann der Gaseinlass 137 bzw. der Niederdruckturbineneinlass 121 so angeordnet sein, dass die Hochdruckturbine 113 oberhalb versetzt zu der Niederdruckturbine 123 angeordnet ist. In anderen Worten kann der Gaseinlass 137 bzw. der Niederdruckturbineneinlass 121 so angeordnet sein, dass die Hochdruckturbine 113 oberhalb der Niederdruckeinheit aber nicht oberhalb der Niederdruckturbine 123 angeordnet ist. Gemäß Ausführungsformen kann der Gaseinlass 137 bzw. der Niederdruckturbineneinlass 121 seitlich der Niederdruckturbine angeordnet sein und die Hochdruckturbine oberhalb des Gaseinlasses 137 bzw. der Niederdruckturbineneinlasses 121 an dem Gaseinlass lösbar verbunden sein.

Gemäß Ausführungsformen, die mit anderen beschriebenen Ausführungsformen kombiniert werden können, kann der Hochdruckverdichter 114 bzw. eine den Schwerpunkt des Hochdruckverdichters enthaltene vertikale Gerade sich von einem Schwerpunkt des Niederdruckverdichters bzw. von einer den Schwerpunkt des Niederdruckverdichters enthaltenen vertikalen Geraden unterscheiden. In anderen Worten können der Hochdruckverdichter und der Niederdruckverdichter bzw. deren Schwerpunkte (in horizontaler Richtung) versetzt zueinander angeordnet sein.

Gemäß Ausführungsformen, die mit anderen beschriebenen Ausführungsformen kombiniert werden können, kann die Hochdruckturbolader-Welle um eine erste Rotationsachse (A1 in Fig. 1) rotierbar sein und die Niederdruckturbolader-Welle um eine zweite Rotationsachse (A2 in Fig. 1) rotierbar sein. Die erste und die zweite Rotationsachse können jeweils horizontal oder vertikal verlaufen. Die erste und zweite Rotationsachse können demnach beide horizontal, beide vertikal oder je eine horizontal und eine vertikal verlaufen. Insbesondere kann die Niederdruckturbolader-Welle horizontal verlaufen und die Hochdruckturbolader-Welle vertikal verlaufen. Die Bezeichnung "horizontal" bezeichnet dabei eine in x-Richtung ± 15% eines kartesischen Koordinatensystems verlaufende Richtung und die Bezeichnung "vertikal " bezeichnet dabei eine in y-Richtung ± 15% eines kartesischen Koordinatensystems verlaufende Richtung. Als horizontale Ebene sind solche Ebenen zu verstehen, die eine Ausdehnung in x-Richtung und eine Ausdehnung in z-Richtung eines kartesischen Koordinatensystems aufweisen. Als vertikale Ebene sind solche Ebenen zu verstehen, die eine Ausdehnung in y-Richtung und eine Ausdehnung in x Richtung oder in z-Richtung eines kartesischen Koordinatensystems aufweisen. Die Montageebene der Niederdruckeinheit ist insbesondere eine horizontale Ebene.

Gemäß Ausführungsformen, die mit anderen beschriebenen Ausführungsformen kombiniert werden können, können die erste Rotationsachse und die zweite Rotationsachse parallel zueinander angeordnet sein. Mit anderen Worten, können die erste Rotationsachse und die zweite Rotationsachse in zwei zu einander parallelen Ebenen, insbesondere zwei zu einander parallelen horizontalen Ebenen, angeordnet sein. Ferner kann die zweite Rotationsachse parallel zur Montageebene der Niederdruckeinheit angeordnet sein, d.h. die zweite und die erste Rotationsachse können parallel zu einer horizontalen Erstreckung der Montageebene verlaufen.

Wie beispielhaft in Figuren 3A und 4A verdeutlicht und gemäß Ausführungsformen, die mit anderen beschriebenen Ausführungsformen kombiniert werden können, kann die erste Rotationsachse nicht-parallel in Bezug auf die zweite Rotationsache versetzt angeordnet sein. Insbesondere kann die erste Rotationsachse in Bezug auf die zweite Rotationsache horizontal um einen Winkel von 90° versetzt angeordnet sein. In anderen Worten kann sich die erste Rotationsachse horizontal in eine z-Richtung eines kartesischen Koordinatensystems erstrecken und die zweite Rotationsachse in eine x-Richtung des kartesischen Koordinatensystems erstrecken. Die erste Rotationsachse und die zweite Rotationsachse können um eine gedachte, gerade Verbindungslinie zwischen den Rotationsachsen drehbar zueinander sein.

Alternativ und gemäß Ausführungsformen, die mit anderen beschriebenen Ausführungsformen kombiniert werden können, kann die erste Rotationsachse in Bezug auf die zweite Rotationsache vertikal um einen Winkel von 90° versetzt angeordnet sein. Entsprechend kann sich z.B. die erste Rotationsachse vertikal in y-Richtung eines kartesischen Koordinatensystems erstrecken und die zweite Rotationsachse horizontal in eine x-Richtung des kartesischen Koordinatensystems erstrecken. Die erste und zweite Rotationsachse können sich in einem Schnittpunkt schneiden. Der Winkel am Schnittpunkt zwischen der ersten und zweiten Rotationsachse kann 90° betragen, also ein rechter Winkel oder ein spitzer oder ein stumpfer Winkel sein.

Gemäß Ausführungsformen, die mit anderen beschriebenen Ausführungsformen kombiniert werden können, kann ein Masseschwerpunkt der Hochdruckturboladereinheit 110 im Wesentlichen gleich einem Masseschwerpunkt der Niederdruckeinheit 120 sein. Insbesondere kann dies der Masseschwerpunkt im ordnungsgemäß aufgebauten Zustand der Hochdruckturboladereinheit und der Niederdruckturboladereinheit sein, wobei der Masseschwerpunkt der Hochdruckeinheit und der Masseschwerpunkt der Niederdruckeinheit jeweils auf eine horizontale Ebene, insbesondere die jeweilige horizontale Montageebene projiziert ist. Die Bezeichnung "im Wesentlichen" kann dabei so verstanden werden, dass sich die Masseschwerpunkte der Hochdruckeinheit und der Niederdruckeinheit bis auf 10% der längsten horizontalen Ausdehnung der zweiten Gehäuseeinheit treffen können.

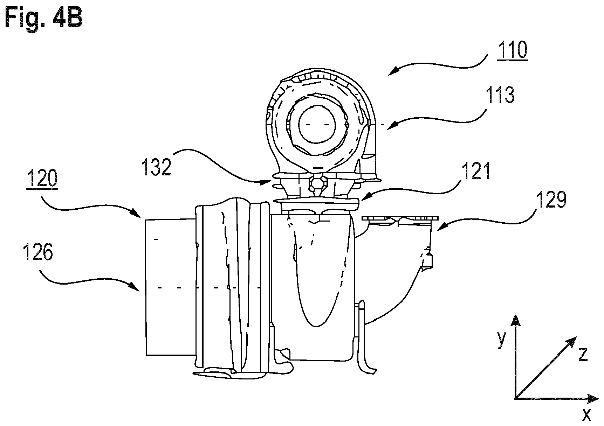

Wie beispielhaft in den Figuren 4A und 4B gezeigt und gemäß Ausführungsformen, die mit anderen beschriebenen Ausführungsformen kombiniert werden können, kann die Hochdruckeinheit auf der Niederdruckeinheit montiert sein. Insbesondere können die erste Gehäuseeinheit und die zweite Gehäuseeinheit lösbar miteinander verbunden bzw. montiert sein, wie gemäß Ausführungsformen beschrieben. Beispielsweise kann der Gaseinlass 137 bzw. der Niederdruckturbineneinlass 121 so angeordnet sein, dass die Hochdruckturbine 113 im Wesentlichen über der Niederdruckturbine 123 angeordnet ist. "Im Wesentlichen" kann dabei so verstanden werden, dass eine vertikale gedachte Verbindungslinie zwischen dem Masseschwerpunkt der Hochdruckturbine und dem Massenschwerpunkt der Niederdruckturbine von einem 90°-Winkel der vertikalen Linie in Bezug zur horizontalen Montageebene der Niederdruckeinheit maximal um ±20° abweicht. In anderen Worten kann die Hochdruckturbine 113 so angeordnet sein, dass sich eine im Wesentlichen direkte vertikale Verbindungslinie zwischen der Mitte der Hochdruckturbine 113 und der Mitte der Niederdruckturbine 123 ergibt, die eine geringst mögliche Länge aufweist. Dementsprechend vorteilhaft kann die Länge der Abgasleitung 132, durch die die Hochdruckturboladereinheit mit der Niederdruckturboladereinheit verbunden sein kann, möglichst gering sein.

Gemäß Ausführungsformen, die mit anderen beschriebenen Ausführungsformen kombiniert werden können, kann die Niederdruckturbine 123 eine Turbine mit sogenannter umgekehrter Strömung sein, d.h. mit einer Strömung von innen nach außen. Eine solche Turbine ist dadurch gekennzeichnet, dass das Abgas radial in das Gehäuse bzw. die Gehäuseeinheit einströmt und axial aus dem Gehäuse bzw. der Gehäuseeinheit abströmt.

Beispielsweise ist in Fig. 4A und 4B dargestellt, dass die Niederdruckturbine und die Hochdruckturbine das Abgas radial abströmen und die Hochdruckturbine das Abgas in im Wesentlichen vertikaler Richtung über den Hochdruckturbinenauslass 112 an die Niederdruckturbineneinheit weiterleitet. Die Niederdruckturbineneinheit weist als Niederdruckturbine 123 eine Turbine mit umgekehrter Strömung auf, bei der das Abgas radial angeströmt (und axial abgeströmt) wird. Dadurch ist eine gerade vertikale Anströmung ohne die in Fig. 3A und 3B dargestellte Umlenkung, sowie eine besonders kompakte Anordnung möglich. Ferner vorteilhaft ist, dass durch den modularen Aufbau somit sowohl der Normalbetrieb (wie in Fig. 3A und 3B illustriert) als auch ein Betrieb mit umgekehrter Strömung (wie in Fig. 3A und 3B illustriert) mit denselben Gehäuseeinheiten für die Hoch- und Niederdruckturboladeranordnungen gewährleistet werden kann.

Es ist zu verstehen, dass Ausführungsformen, wie sie hier beschrieben sind, den Vorteil bieten, dass zwei oder mehr getrennte Turbinen so beabstandet werden können, dass der Abgasstrom, der durch die Abgasleitung auf kürzestem Wege von der Hochdruckturbine zur Niederdruckturbine geleitet wird, optimiert wird. Dies ermöglicht die Eliminierung von Verbindungsrohren innerhalb der verschiedenen Turbinenstufen, und die Turbine mit umgekehrter Strömung ermöglicht es den heißen Gasen, durch die verschiedenen Stufen zu strömen, wobei die natürliche Strömung der Gase nur minimal gestört wird.

Während sich das Vorstehende auf Ausführungsformen der Offenbarung bezieht, können andere und weitere Ausführungsformen der Offenbarung ausgearbeitet werden, ohne vom grundlegenden Umfang der Offenbarung abzuweichen, und der Umfang der Offenbarung wird durch die folgenden Ansprüche bestimmt.

## Patentansprüche

1. Mehrstufige Turboladeranordnung (100), umfassend:
eine Hochdruckturboladereinheit (110) umfassend eine erste Gehäuseeinheit (134), eine Hochdruckturbine (113) und einen Hochdruckverdichter (114), wobei die Hochdruckturbine (113) und der Hochdruckverdichter (114) über eine Hochdruckturbolader-Welle rotativ aneinander gekoppelt sind;
eine Niederdruckturboladereinheit (120) umfassend eine zweite Gehäuseeinheit (136), eine Niederdruckturbine (123) und einen Niederdruckverdichter (124), wobei die Niederdruckturbine (123) und der Niederdruckverdichter (124) über eine Niederdruckturbolader-Welle rotativ aneinander gekoppelt sind,
wobei die Hochdruckturbine (113) über eine Abgasleitung (132) fluidisch an die Niederdruckturbine (123) gekoppelt ist, um Abgas von der Hochdruckturbine (113) zu der Niederdruckturbine (123) zu leiten, und wobei der Niederdruckverdichter (124) über eine Leitung fluidisch an den Hochdruckverdichter (114) gekoppelt ist, um ein Fluid von dem Niederdruckverdichter (124) zu dem Hochdruckverdichter (114) zu leiten, und
wobei die Hochdruckturboladereinheit (110) und die Niederdruckturboladereinheit (120) lösbar miteinander verbunden sind, und
wobei die Niederdruckturboladereinheit (120) die Hochdruckturboladereinheit (110) im montierten Zustand trägt.

2. Die mehrstufige Turboladeranordnung (100) gemäß Anspruch 1, wobei die Abgasleitung (132) einen in der Hochdruckturboladereinheit (110) verlaufenden, sich in eine Strömungsrichtung aufweitenden Diffusorabschnitt umfasst.

3. Die mehrstufige Turboladeranordnung (100) gemäß Anspruch 1, wobei die Abgasleitung (132) einen in der Hochdruckturboladereinheit (110) verlaufenden, sich in eine Strömungsrichtung konisch verengenden Leitungsabschnitt umfasst.

4. Die mehrstufige Turboladeranordnung (100) gemäß einem der Ansprüche 2 oder 3, wobei der Diffusorabschnitt oder der konisch verengende Leitungsabschnitt vollständig innerhalb der ersten Gehäuseeinheit (134) und/oder der zweiten Gehäuseeinheit (136) verläuft.

5. Die mehrstufige Turboladeranordnung (100) gemäß einem der Ansprüche 2 bis 3, wobei der Diffusorabschnitt oder der konisch verengende Leitungsabschnitt eine Grenzfläche zwischen der ersten und der zweiten Gehäuseeinheit (134, 136) durchläuft oder an die Grenzfläche angrenzt.

6. Die mehrstufige Turboladeranordnung (100) gemäß Anspruch 5, wobei die Grenzfläche einen Gaseinlass (137) umfasst, wobei der Diffusorabschnitt (132) oder der konisch verengende Leitungsabschnitt an den Gaseinlass angrenzt.

7. Die mehrstufige Turboladeranordnung (100) gemäß einem der vorangehenden Ansprüche, wobei die Abgasleitung vollständig innerhalb der ersten und zweiten Gehäuseeinheit (134, 136) verläuft.

8. Die mehrstufige Turboladeranordnung (100) gemäß einem der vorangehenden Ansprüche, wobei die Abgasleitung eine Grenzfläche zwischen der ersten und der zweiten Gehäuseeinheit (134, 136) durchläuft.

9. Die mehrstufige Turboladeranordnung (100) gemäß einem der vorangehenden Ansprüche, wobei die erste Gehäuseeinheit (134) und die zweite Gehäuseeinheit (136) jeweils einen die Abgasleitung umlaufenden Flanschteil aufweisen, und wobei die erste Gehäuseeinheit (134) und die zweite Gehäuseeinheit (136) an den Flanschteilen miteinander lösbar verbunden sind.

10. Die mehrstufige Turboladeranordnung (100) gemäß einem der vorstehenden Ansprüche, wobei sich der Diffusorabschnitt oder der konisch verengende Leitungsabschnitt über mehr als 50% einer Länge der Abgasleitung (132) erstreckt, insbesondere über mehr als 80% der Länge der Abgasleitung, insbesondere über mehr als 90% der Länge der Abgasleitung erstreckt.

11. Die mehrstufige Turboladeranordnung (100) gemäß einem der vorstehenden Ansprüche, wobei ein Masseschwerpunkt der Hochdruckturboladereinheit (110) im Wesentlichen gleich einem Masseschwerpunkt der Niederdruckeinheit (120) ist.

12. Die mehrstufige Turboladeranordnung (100) gemäß einem der vorstehenden Ansprüche, wobei die Hochdruckturbolader-Welle um eine erste Rotationsachse rotierbar ist und die Niederdruckturbolader-Welle um eine zweite Rotationsachse rotierbar ist, und wobei die erste Rotationsachse und die zweite Rotationsachse parallel zueinander angeordnet sind oder die erste Rotationsachse nicht-parallel in Bezug auf die zweite Rotationsache versetzt angeordnet ist.

13. Die mehrstufige Turboladeranordnung (100) gemäß Anspruch 12, wobei die erste Rotationsachse in Bezug auf die zweite Rotationsache horizontal um einen Winkel von 90° versetzt angeordnet ist oder die erste Rotationsachse in Bezug auf die zweite Rotationsache vertikal um einen Winkel von 90° versetzt angeordnet ist.

14. Die mehrstufige Turboladeranordnung (100) gemäß einem der vorstehenden Ansprüche, wobei die erste Gehäuseeinheit (134) ein Abblaseelement zur Bereitstellung einer Vorrichtung zur Begrenzung eines Ladedrucks aufweist und/oder wobei die zweite Gehäuseeinheit (136) einen Niederdruckverdichter-Luftauslass aufweist, insbesondere zur Versorgung des Zwischenkühlers mit Niederdruckluft, und die erste Gehäuseeinheit (134) einen Hochdruckverdichter-Lufteinlass aufweist, insbesondere zum Einlass der gekühlten Ladeluft.

15. Die mehrstufige Turboladeranordnung (100) gemäß einem der vorstehenden Ansprüche, wobei zumindest eins der folgenden a) bis d) gilt:
a) die Niederdruckturbine (123) ist so angeordnet, dass das Abgas in axialer Richtung eingelassen und, dass das Abgas in radialer Richtung ausgelassen wird;
b) die Niederdruckturbine (123) ist so angeordnet, dass das Abgas in radialer Richtung eingelassen und, dass das Abgas in axialer Richtung ausgelassen wird;
c) die Hochdruckturbine (113) ist so angeordnet, dass das Abgas in axialer Richtung einlassen und, dass das Abgas in radialer Richtung ausgelassen wird;
d) die Hochdruckturbine (113) ist so angeordnet, dass das Abgas in radialer Richtung eingelassen und, dass das Abgas in axialer Richtung ausgelassen wird.
